# EUROPEAN PATENT SPECIFICATION

(11) **EP 1 744 582 B1**
(45) Date of publication and mention of the grant of the patent: **19.11.2008**
(21) Application number: 06014758.4
(22) Date of filing: 14.07.2006
(51) Int. Cl.: H04Q 7/38

(54) **Method and aparatus for performing handover between core network entities in a packet-swiched network**
Verfahren und Vorrichtung zum Durchführen von Handover zwischen Kernnetzwerkeinheiten in einem paketvermittelten Netzwerk
Procédé et appareil pour le transfert d'appels entre entités de réseau central dans un réseau de paquets commutés

(30) Priority: 15.07.2005 KR 20050064363
(43) Date of publication of application: 17.01.2007
(73) Proprietor: SAMSUNG ELECTRONICS CO., LTD., Suwon-si, Gyeonggi-do (KR)
(72) Inventor: Bae, Eun-Hui, Yeongtong-gu Suwon-si Gyeonggi-do (JP); Choi, Sung-Ho, Yeongtong-gu Suwon-si Gyeonggi-do (JP); Kwak, No-Jun, Yeongtong-gu Suwon-si Gyeonggi-do (JP); Song, O-Sok, Yeongtong-gu Suwon-si Gyeonggi-do (JP); Lim, Han-Na, Yeongtong-gu Suwon-si Gyeonggi-do (JP)
(74) Representative: Grünecker, Kinkeldey, Stockmair & Schwanhäusser Anwaltssozietät

(56) References cited:
- WO-A-02/17670
- US-A1- 2002 141 361
- US-A1- 2002 191 562
- US-A1- 2004 085 931
- US-B1- 6 904 025

## Description

### BACKGROUND OF THE INVENTION

### Field of the Invention:

The present invention relates generally to a packet-switched network. More particularly, the present invention relates to a method and apparatus for simultaneously performing Layer 2 (L2) handover between Radio Access Networks (RANs) and Layer 3 (L3) handover between Core Networks (CNs) for handover between CN entities.

### Description of the Related Art:

Universal Mobile Telecommunication System (UMTS), an asynchronous 3rd Generation (3G) mobile communication system based on European Global System for Mobile communications (GSM) and General Packet Radio Services (GPRS) and operating in Wideband Code Division Multiple Access (WCDMA), provides a uniform service of sending packet text, digital voice or video, and multimedia data at or above 2Mbps to mobile users or computer users irrespective of their locations. With an introduction of a concept of virtual access, UMTS enables access to any end point within a network. The virtual access refers to packet-switched connection using a packet protocol like Internet Protocol (IP).

Compared to the UMTS system where network entities are connected in Asynchronous Transfer Mode (ATM) and connected to an external packet data network via a gateway node (that is, Gateway GPRS Support Node (GGSN), Enhanced-UMTS (E-UMTS) offers IP-based connectivity between network entities, thereby reducing the number of intermediate nodes via which a User Equipment (UE) is connected to the packet data network and thus enables fast data transmission.

A typical UMTS system is comprised of RANs and a CN. The RAN takes charge of Layer 1 (L1) and L2 protocols and is wirelessly connected to UEs. The CN takes charge of the L3 protocol and connects the RAN to an external network. The UMTS system provides L2 handover through Serving Radio Network System (SRNS) reallocation and L3 handover through inter-Serving GPRS Support Node (inter-SGSN) handover.

Typical L2 and L3 handover schemes do not support IP address mobility because a UE moving between CN entities is not identified by its IP address. IP address version 6 (IPv6) technology proposed by the Internet Engineering Task Force (IETF) allocates and configures IP addresses by the Ethernet-based L3 network control protocol. Therefore, an active operation of an IP control protocol based on Ethernet over which messages are broadcast is not ensured in the E-UMTS network in which control information is delivered only in a dedicated path between a UE and the network. Moreover, L3 handover suffers a long delay and large packet loss.
Accordingly, there is a need for improved handover between Core Network entities in a packet-switched network.
US 2004/0085931 A1 discloses a method and apparatus for handoff of a wireless packet data service connection. Location information is provided to an access terminal when this is unable to contact a last serving packet data serving node. Access network element within an area supported by the packet data serving node have the same access network ID. Any movement of the access terminal within the area supported by the packet data serving node will not initiate an update of location information. The access terminal receives location information specific to the packet data serving node and not the access network.

### SUMMARY OF THE INVENTION

It is an object of the present invention to provide a method and an apparatus for performing fast and seamless handover between CN entities in a packet-switched network developed from a 3G mobile communication system.
This object is solved by the features of the independent claims.
According to an embodiment of the present invention, in a handover method between CNs in a packet-switched network having a plurality of RANs accessible to a UE and CNs for connecting the RANs to an external network over IP, when a UE connected to an old CN through an old RAN moves to a new RAN belonging to a new CN, the old RAN sends a handover required message to the new RAN. The new RAN acquires a new IP address for the UE from the new CN in response to the handover required message and sends a handover command message including the new IP address to the old RAN. The old RAN inserts an address of the new RAN in the handover command message and forwards the handover command message with the address of the new RAN to the UE. The UE performs an inter-RAN handover in response to the handover command message, thereby communicating with the old CN through the new RAN. The UE then performs an inter-CN handover based on the new IP address included in the handover command message, thereby communicating with the new CN through the new RAN.
Advantageous embodiments of the invention are disclosed by the subclaims.
Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 illustrates a network configuration according to an exemplary embodiment of the present invention;
FIG. 2 conceptually illustrates an L2 handover procedure according to an exemplary embodiment of the present invention;
FIGs. 3A - 3C conceptually illustrate an L3 handover procedure according to an exemplary embodiment of the present invention;
FIG. 4 is a diagram illustrating a signal flow for performing L2 handover and L3 handover by L2 signaling according to an exemplary embodiment of the present invention;
FIG. 5 is a flowchart illustrating a UE operation according to an exemplary embodiment of the present invention;
FIG. 6 is a flowchart illustrating an old E-RAN operation according to an exemplary embodiment of the present invention; and

FIG. 7 is a flowchart illustrating a new E-RAN operation according to an exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

The present invention is intended to enable handover between network entities, ensuring IP address mobility of a UE by sending IP address control information to the UE by an L2 signaling message from an ATM-based control plane, rather than by an IP control protocol such as Internet Control Message Protocol (ICMP). A description will be made herein of exemplary embodiments of the present invention in which L3 control information, for example, IP layer control information required for L3 handover is sent by an L2 signaling message.

When moving between RANs within the same CN, the UE performs L2 handover, while when moving between RANs belonging to different CNs, the UE performs L2 handover and L3 handover successively. In the latter case, information for the L3 handover (for example, IP address or new CN address) is included in the L2 signaling message sent to the UE for the L2 handover. Thus the UE performs the L3 handover to a new CN based on the information set in the L2 signaling message.

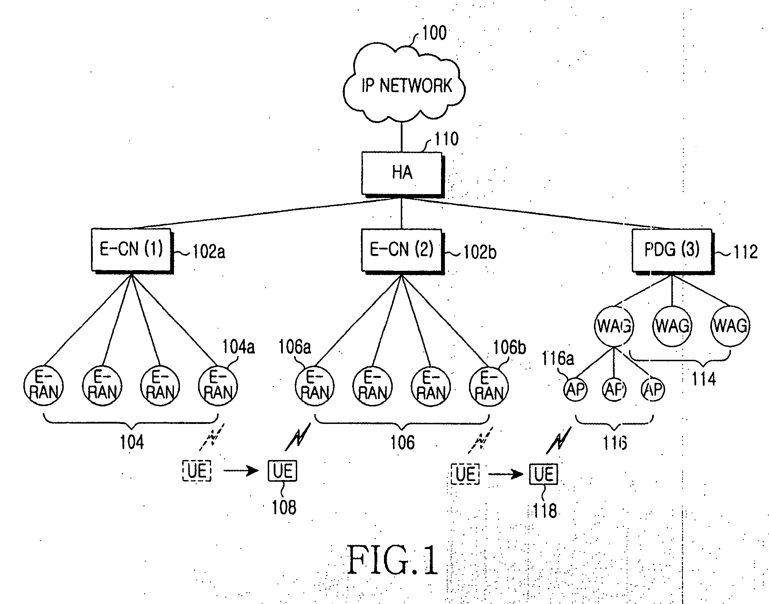

FIG. 1 illustrates a network configuration according to an exemplary embodiment of the present invention. The network configuration includes a packet-switched network developed from a 3G mobile communication system and the present invention is applicable to a 3G Long Term Evolution (LTE) network, that is, an Evolution/Enhanced network.

Referring to FIG. 1, the network includes a plurality of Enhanced-Core Networks (E-CNs) 102a and 102b which are connected to an IP network 100 under the control of a Home Agent (HA) 110, and a plurality of Enhanced-Radio Access Networks (E-RANs) 104 and 106 connected to the E-CNs 102a and 102b. The term "E(Enhanced)" means that the entities communicate with each other based on IP. A Packet Data Gateway (PDG) 112 is connected to the HA 110. A plurality of Wireless Local Area Network (WLAN) Access Gateways (WAGs) 114 is connected to the PDG 112, and a plurality of Access Points (APs) 116 is connected to each of the WAGs 114. While the HA 110 is shown as a physically independent entity, the ILA 110 may be configured to be a logical entity included in the E-CNs 102a and 102b.

During moving from the E-RAN 104a belonging to the E-CN 102a to the E-RAN 106a belonging to the E-CN 102b, a UE 108 performs L2 handover and L3 handover simultaneously. When a UE 118 moves from the E-RAN 106b to the AP 116a belonging to the PDG 112, the UE 118 also performs L2 handover and L3 handover simultaneously. The L2 handover is carried out by a known WLAN L2 protocol. The following description is made of an operation of the UE 108 for handover between the E-CNs 102a and 102b, by way of example.

The UE 108 receives cell information from accessible cells and sends the cell information to the E-RAN 104a or decides whether to perform an L2 handover to a target cell based on the cell information. Also, the UE 108 stores an IP address allocated by the E-CN 102a. When acquiring a new IP address from the E-CN 102b, the UE 108 triggers an L3 handover procedure for IP address mobility.

The E-RAN 104a determines whether to perform the L2 handover for the UE 108 and may determine the routable address of the target cell based on the cell information. The E-RANs 104a and 106a may request a new IP address to the E-CN 102b for the UE 108, considering that the new IP address is needed for the UE 108. The E-RAN 106a may establish a tunnel between the E-CN 102a and the E-CN 102b for the UE 108.

In the case of handover between E-CNs requiring concurrent L2 and L3 handovers, the L3 handover can be efficiently supported by L2 signaling. For this purpose, L3 control information is sent to the UE by a L2 signaling message from a control plane in an exemplary embodiment of the present invention.

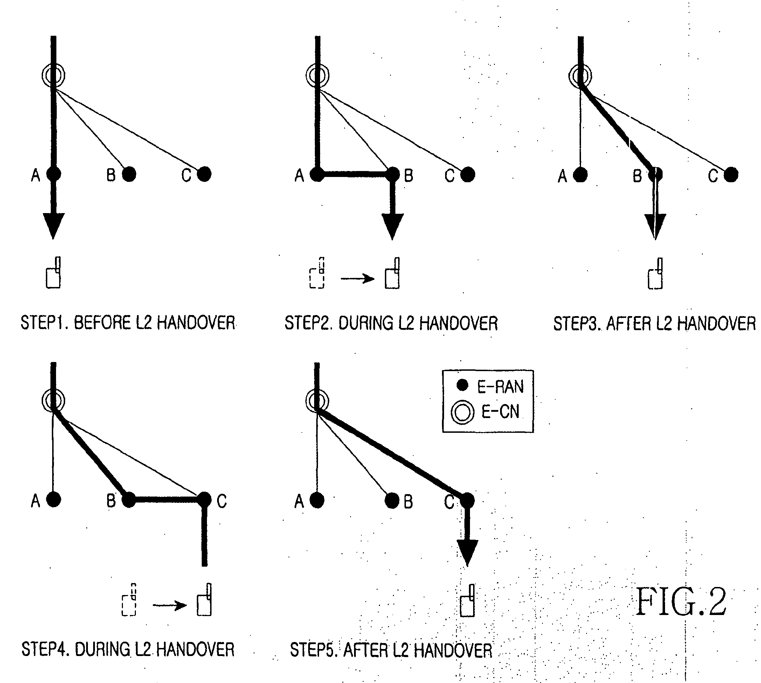

FIG. 2 conceptually illustrates an L2 handover procedure according to an exemplary embodiment of the present invention. In the illustrated case of three E-RANs A, B and C belong to the same E-CN.

Referring to FIG. 2, a UE is connected to an E-CN via E-RAN A in step 1. In step 2, As the UE moves to E-RAN B, the UE performs L2 handover and is connected to the E-CN via E-RAN B and E-RAN A. After the L2 handover, the UE is connected to the E-CN via E-RAN B in step 3. As the UE moves to E-RAN C, the UE performs L2 handover and is connected to the E-CN via E-RAN C and E-RAN B in step 4. After the L2 handover, the UE is connected to the E-CN via E-RAN C in step 5.

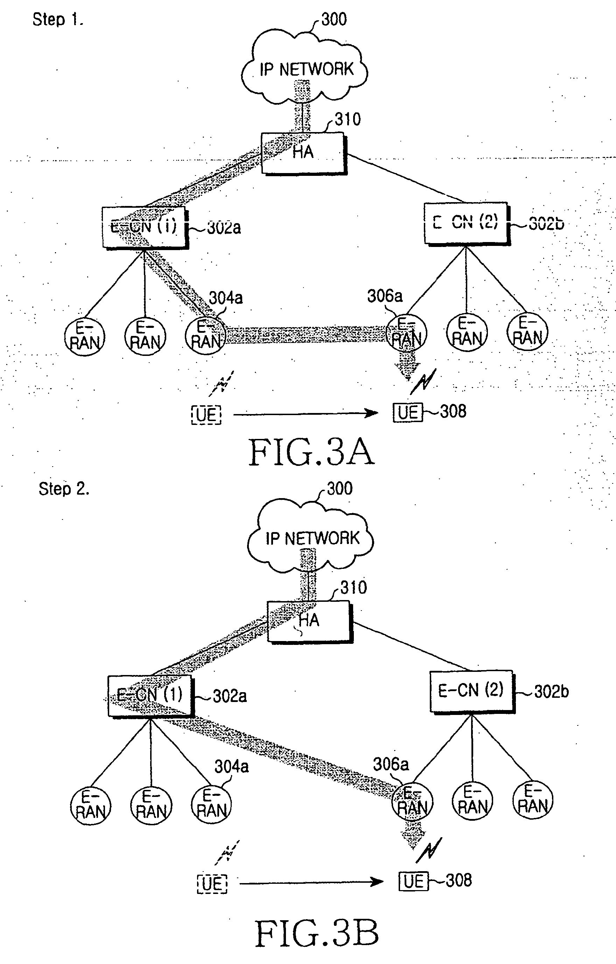

FIGs. 3A - 3C conceptually illustrates an L3 handover procedure according to an exemplary embodiment of the present invention. In FIGs. 3A - 3C, an old E-CN 302a and a new E-CN 302b are connected to an IP network 300 under the control of the HA 310, and an old E-RAN 304a and a new E-RAN 306a are connected to the old E-CN 302a and the new E-CN 302b, respectively. As a UE 308 moves from the old E-RAN 304a to the new E-RAN 306a, the UE 308 performs L3 handover along with L2 handover.

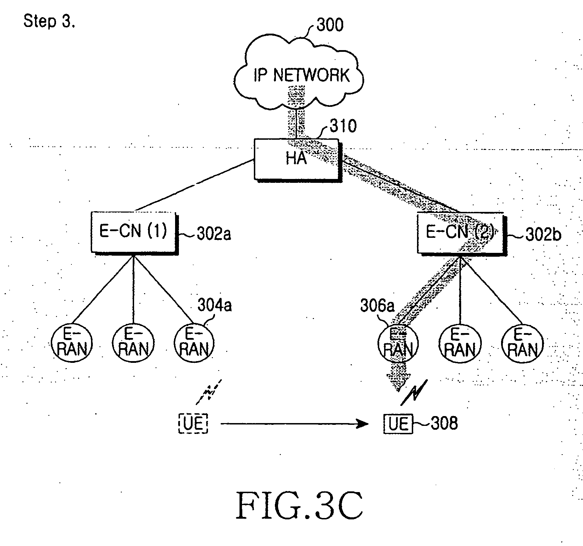

Referring to FIG. 3A, in step 1, the UE 308 moves from the old E-RAN 304a to the new E-RAN 306a, while the UE 308 is connected to the old E-CN 302a via the new E-RAN 306a and the old E-RAN 304a. A tunnel is established between the new E-RAN 306a and the old E-CN 302a, and the UE 308 is connected to the old E-CN 302a via the new E-RAN 306a and the tunnel in step 2 of FIG. 3B. L3 handover is completed and thus the UE 308 is connected to the new E-CN 302b via the new E-RAN 306a in step 3 of FIG. 3C.

During the handover between the E-CNs illustrated in FIGs. 3A - 3C, the UE 308 recognizes that the old E-CN 302a has been changed to the new E-CN 302b, acquires a new IP address for the L3 handover from the new E-CN 302b, and registers the new IP address to an HA and a communicating correspondent node via the new E-RAN 306a. Handover between E-CNs will be described below according to an exemplary embodiment of the present invention.

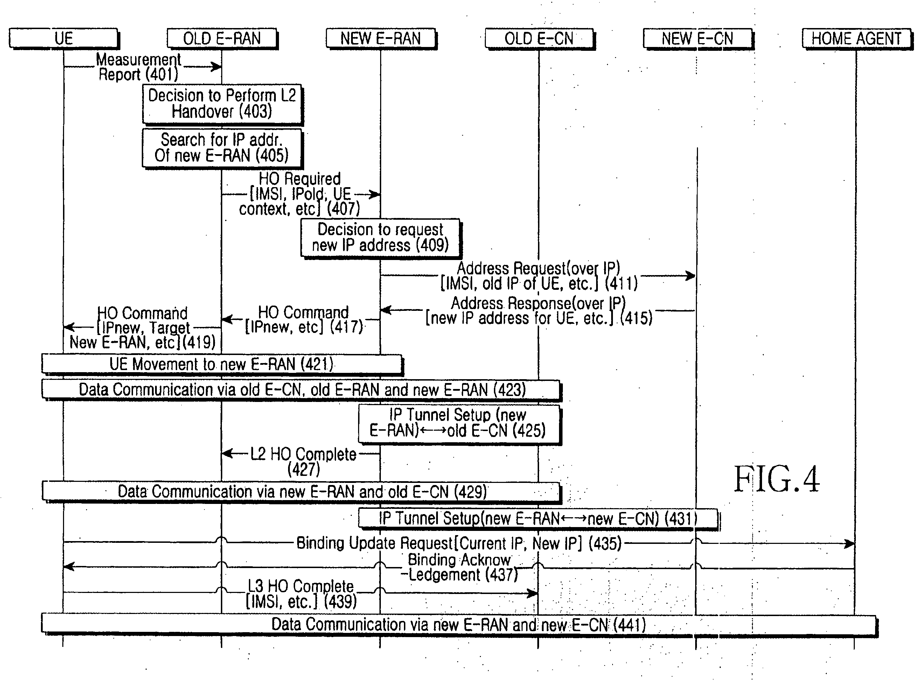

FIG. 4 is a diagram illustrating a signal flow for performing L2 handover and L3 handover by L2 signaling according to an exemplary embodiment of the present invention.

Referring to FIG. 4, a UE collects information about neighbor cells and sends the cell information to an old E-RAN by a Measurement Report message in step 401. The Measurement Report message contains the International Mobile Station Identifier (IMSI) of the UE, an old IP address (hereinafter, referred to IPold) now in use for the UE, and cell measurements collected from the neighbor cells.

In an exemplary implementation, it can be further contemplated that if the UE itself can select a target cell for L2 handover based on the cell measurements, the UE selects the target cell and notifies the old E-RAN of the target cell in a 'selected cell' field of the Measurement Report message.

Upon receipt of the Measurement Report message, the old E-RAN determines whether there is any cell providing better performance than a serving cell based or the cell information. If such a cell (that is, a target cell) is detected, the old E-RAN decides handover of the UE to the target cell in step 403. In step 405, the old E-RAN detects the IP address of the target cell. The old E-RAN already has knowledge of routing information about candidate cells, that is, the IP address of a new E-RAN.

If the old E-RAN receives information indicating the target cell from the UE, as described above, the old E-RAN jumps directly to step 405, without step 403.

In step 407, the old E-RAN sends a HandOver (HO) Required message to a new E-RAN that controls the L2 handover target cell. The HO Required message contains the IMSI and IPold of the UE and a UE context including subscriber information of the UE. The IPold is used as a reference value with which the new E-RAN decides whether a new IP address is to be allocated to the UE. Upon receipt of the HO Required message, the new E-RAN determines whether to allocate a new IP address to the UE based on the IPold in step 409. For example, the new E-RAN compares the prefix of the IPold with the prefix of a new CN to which the new E-RAN belongs and determines whether to allocate a new IP address to the UE, if the prefixes are different.

In an exemplary implementation, the old E-RAN compares the IP address of the new E-RAN detected in step 405 with the IPold of the UE. If the IP addresses are different, the old E-RAN determines that the UE is to be allocated a new IP address. In this case, routing shall be performed between E-RANs based on the IP address. When the IPold of the UE is included in the HO Required message requesting L2 handover sent from the old E-RAN, the new E-RAN triggers a new IP address allocation procedure of steps 411 and 415.

In the case where a new IP address is required for the UE requesting the L2 handover, the new E-RAN sends an Address Request message to a new E-CN to request for the new IP address in step 411. The Address Request message contains the IMSI and IPold of the UE. The new E-CN allocates the new IP address (hereinafter, referred to as IPnew) to the UE and stores the new IP address. Then the new E-CN sends an Address Response message with the IPnew to the new E-RAN in step 415. To enable the new E-CN to generate a UE context for the UE in advance, the new E-RAN may include information required for generation of the UE context, for example, information about the serving E-RAN and Quality of Service (QoS) in the Address Request message.

In step 417, the new E-RAN sends the IPnew to the old E-RAN by an HO Command message. The HO Command message functions to indicate that the handover request has been accepted as well as to provide the IPnew. The old E-RAN adds the address of the new E-RAN (Target New E-RAN) to the HO Command message and forwards the resulting message to the UE in step 419.

If the HO Command message includes the IPnew, the UE determines to register the IPnew to a HA for L3 handover. Hence, the UE stores the IPnew and moves to the new E-RAN in step 421 and transmits/receives data via a communication path running from the new E-RAN through the old E-RAN to the old E-CN in step 423.

Meanwhile, the new E-RAN establishes an IP tunnel with the old E-CN to set up a direct communication path between them in step 425. After the tunneling, the new E-RAN sends an HO Complete message indicating completion of the L2 handover to the old E-RAN in order to release the UE context information of the UE in step 427. The old E-RAN sends all buffered data associated with the UE to the new E-RAN and deletes the UE context associated with the UE.

When the L2 handover is completed in step 401 through step 427, the UE sends/receives packet data through the new E-RAN and the old E-CN in step 429. In step 431, the new E-RAN establishes an IP tunnel with the new E-CN to support L3 handover for the UE. Since step 431 occurs irrespective of the UE, step 431 may be performed at any time after step 415 where the new E-RAN acquires the IPnew of the UE.

The UE, which has received the IPnew by the HO Command message in step 419, registers the IPnew to the HA by a Binding Update Request message in step 435. Before sending the Binding Update Request message, an IP Security Association (IPSec SA) and an IPSec tunnel may be set up in order to protect the Binding Update Request message and data sent from the UE to the network. The setup of the IPSec tunnel will not be described in detail herein for clarity and conciseness.

The HA updates the IPold of the UE with the IPnew in its binding cache. Then the HA notifies the UE of a normal completion of the binding update by a Binding Acknowledgement message in step 437 and sends an L3 HO Complete message to the old E-CN, notifying of completion of the L3 handover in step 439. Thus the old E-CN recognizes that the UE has handed over to the new E-CN and deletes the UE context of the UE. If the information for generation of the UE context has not been provided to the new E-CN yet, the old E-CN may forward the UE context information of the UE iu the new E-CN, after receiving the L3 HO Complete message. In step 441, the UE has completed the L2 and L3 handovers and sends/receives packet data through the new E-RAN and the new E-CN.

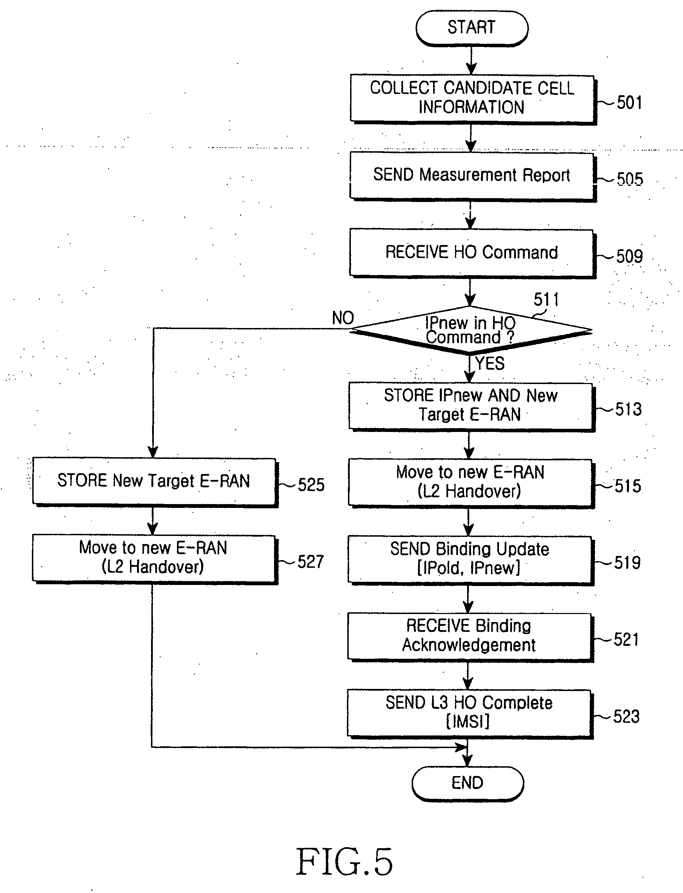

FIG. 5 is a flowchart illustrating a UE operation according to an exemplary embodiment of the present invention.

Referring to FIG. 5, the UE collects information about candidate cells during packet transmission/reception in step 501. In step 505, the UE sends a Measurement Report message including the IMSI and IPold of the UE and the cell information to the old E-RAN periodically or when a predetermined condition is fulfilled. In an exemplary implementation, it can be further contemplated that the Measurement Report message contains information indicating a UE-selected target cell for L2 handover as well as the IPold and IMSI of the UE.

In step 509, the UE receives a HO Command message in response to the Measurement Report message from the old E-RAN. The HO Command message may contain an IPnew allocated to the UE and the address of the new E-RAN that controls the target cell. If the new E-RAN does not belong to the new E-CN, the HO Command message does not have the IPnew. The UE checks the presence or absence of the IPnew in the HO Command message in step 511. In the absence of the IPnew, the UE stores the information included in the HO Command message such as the address of the new E-RAN in step 525 and performs L2 handover in step 527. Thus, the UE is now able to send/receive packet data through the old E-CN, the old E-RAN, and the new E-RAN.

In the presence of the IPnew in the HO Command message, the UE recognizes that L3 handover as well L2 handover is required. Then the UE stores the IPnew and the address of the new E-RAN in step 513 and performs the L2 handover to the new E-RAN in step 515. Then the UE proceeds to step 519 to register the IPnew to the HA without an additional IP address acquisition procedure from the new E-CN.

Before the IPnew registration, the UE may establish an IPSec SA and an IPSec tunnel with the HA, if a security mechanism is used for protecting L3 handover messages and IP packet data. The IPSec-associated procedure will not be shown and described herein for clarity and conciseness.

In step 519, the UE sends a Binding Update message to the HA. The Binding Update message contains a Home Address (HoA) allocated by the HA and the IPnew allocated by the new E-CN. The HoA is a fixed IP address permanent to the UE or valid for a predetermined period of time. In step 521, the UE receives a Binding Acknowledgement message from the HA. Then the UE sends an L3 HO Complete message to the old E-CN in order to notify of completion of the L3 handover and trigger deletion of a UE context for the UE in step 523. Accordingly, the L2 and L3 handovers are completed and the UE continues packet transmission and reception through the new E-RAN and the new E-CN without passing through the old E-RAN.

The operations of the E-RANs will now be described. An E-Ran analyzes messages received from a UE or another E-RAN. Upon receipt of a Measurement Report message, the E-RAN operates as an old E-RAN. Upon receipt of an HO Request message containing the IPold of a UE from another E-RAN, the E-RAN operates as a new E-RAN. The operations of the old and new E-RANs will be described below separately.

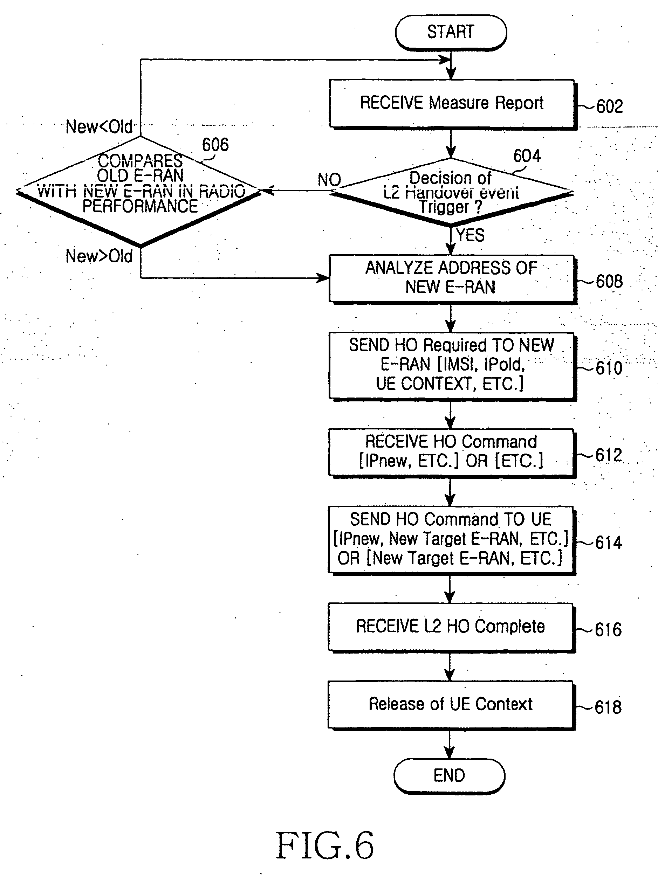

FIG. 6 is a flowchart illustrating an old E-RAN operation according to an exemplary embodiment of the present invention.

Referring to FIG. 6, during packet communication with the UE, the old E-RAN receives a Measurement Report message from the UE in step 602 and determines whether to perform L2 handover based on cell information included in the Measurement Report message in step 604. If the Measurement Report message includes information about measurements of candidate cells done by the UE, the old E-RAN decides whether to perform the L2 handover. Therefore, the old E-RAN compares a current radio performance with the radio performances of the candidate cells in step 606. If any candidate cell offering better performance than the current radio performance exists, the old E-RAN selects the candidate cell as a target cell and proceeds to step 608. In the absence of a candidate cell offering better performance than the old E-RAN, the old E-RAN returns to step 602 and awaits reception of another Measurement Report message. On the other hand, if the Measurement Report message includes information indicating a UE-selected target cell, the old E-RAN jumps from step 604 to step 608.

In step 608, the old E-RAN detects the routable address of the new E-RAN that serves the target cell. The old E-RAN then sends a HO Required message to the new E-RAN in step 610. The HO Required message contains the IMSI, IPold, and UE context information of the UE. The old E-RAN receives a HO Command message from the new old E-RAN in response for the HO Required message in step 612. If the HO Command message incudes the IPnew of the UE along with other information for use in the new E-CN, this implies that L3 handover is required. On the other hand, if the HO Command message does not have the IPnew, this implies that the L3 handover is not needed.

In step 614, the old E-RAN forwards the HO Command message attached with the address of the new E-RAN to the UE. The old E-RAN receives a L2 HO Complete message from the UE in step 616 and deletes a UE context for the UE in step 618.

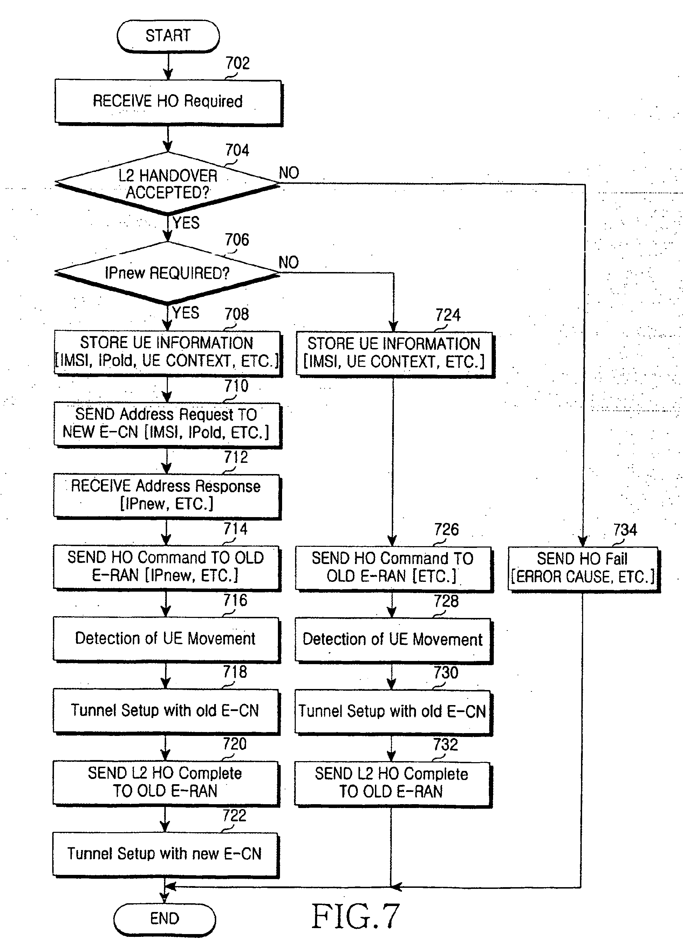

FIG. 7 is a flowchart illustrating a new E-RAN operation according to an exemplary embodiment of the present invention.

Referring to FIG. 7, the new E-RAN receives a HO Required message from the old E-RAN in step 702 and determines whether to accept the L2 handover request for the UE in step 704. If the L2 handover request cannot be accepted, the new E-RAN sends a HO Fail message with a cause value indicating the reason for rejecting the L2 handover request to the old E-RAN in step 734 and then terminates the handover procedure.

If the L2 handover request is accepted, the new E-RAN determines whether an IPnew is needed for the UE based on the IPold of the UE set in the HO Required message. In an exemplary implementation, if the prefix of the IPold is different from the prefix of the IP address of the new E-CN connected to the new E-RAN by a dedicated link, the new E-RAN determines that the IPnew is needed for the UE. In an exemplary embodiment of the present invention, the old E-RAN performs step 706 instead of the new E-RAN. That is, the old E-RAN determines whether the IPnew is needed for the UE based on the prefix of the IP address associated with the new E-RAN and the IPold of the UE. If the IPnew is required, the old E-RAN inserts an indication requesting the IPnew of the UE in the HO Required message to be sent to the new E-RAN.

If determining that the IPnew is required for the UE in step 706 or based on the indication received from the old E-RAN, the new E-RAN stores the IMSI, IPold and UE context information of the UE in step 708 and requests the IPnew to the new E-CN connected to the new E-RAN by the dedicated link by an Address Request message in step 710. The Address Request message includes the IMSI and IPold of the UE. In step 712, the new E-RAN receives an Address Response message including the IPnew allocated by the new E-CN in step 712.

In step 714, the new E-RAN provides the IPnew and information required for the L2 handover of the UE to the old E-RAN by a HO Command message. In an exemplary embodiment of the present invention, the new E-RAN sends the Identification (ID) of the new E-RAN and part of QoS information to the new E-CN in order to enable the new E-CN to generate a UE context for the UE in advance. In this case, the new E-CN generates a draft UE context based on the information included in the Address Request message. In an exemplary implementation, it can be further contemplated that the UE context information is forwarded from the old E-CN to the new E-CN by a predetermined control message after step 714 in which the L3 handover is completed. For this purpose, the UE acquires the routable address information of the new E-CN beforehand.

After sending the HO Command message to the old E-RAN, the new E-RAN detects the movement of the UE by the L2 handover in step 716. Meanwhile, the new E-RAN establishes a tunnel for direct data communication with the old E-CN separately from a data communication path via the old E-RAN and the old E-CN in step 718. After the tunneling between the new E-RAN and the old E-CN, the new E-RAN sends an L2 HO Complete message to the old E-RAN in step 720. The L2 HO Complete message is used to notify of completion of the L2 handover and trigger deletion of a UE context for the UE. In step 722, the new E-RAN establishes a data tunnel with the new E-CN, for transmission of L3 messages of the UE. This tunnel may be established at any time after the new E-RAN acquires the IPnew of the UE, irrespective of the operation of the UE.

On the contrary, if there is no need for allocating the IPnew to the UE according to the HO Required message, that is, if the prefix of the IPold is identical to that of the new E-CN, the new E-RAN stores the information of the UE set in the HO Required message in step 724 and sends a HO command message containing information required for the L2 handover of the UE in step 726. The new E-RAN detects the movement of the UE by the L2 handover in step 728, establishes a tunnel with the old E-CN in step 730, and sends an L2 HO Complete message to the old E-RAN in step 732. Thus, the L2 handover procedure is completed.
In accordance with the exemplary embodiments of the present invention as described above, a UE is notified that L3 handover will follow L2 handover by providing the UE with information required for L3 handover between CNs by an L2 signaling message used for L2 handover between RANs. Thus, an additional step for acquiring control information needed for the L3 handover in the UE is not performed. Accordingly, fast L3 handover can be provided.
While the invention has been shown and described with reference to certain exemplary embodiments thereof, it will be understood by those skilled in the art that various changes in form and details may be made therein without departing from the scope of the invention as defined by the appended claims.

## Claims

1. A handover method between Core Networks (302a, b), CNs, in a packet-switched network having a plurality of Radio Access Networks (304a, b), RANs, accessible to a User Equipment (308), UE, and CNs for connecting the RANs to an external network over Internet Protocol, IP, comprising:
sending (405) a handover required message from an old RAN (304a) to a new RAN (304b) when a UE (308) connected to an old CN (302a) through the old RAN moves to the new RAN belonging to a new CN (302b);
acquiring (411) a new IP address for the UE from the new CN (302b) in response to the handover required message by the new RAN;
sending (417) a handover command message including the new IP address from the new RAN to the old RAN;
inserting (419) an address of the new RAN (306a) in the handover command message and forwarding the handover command message with the address of the new RAN to the UE (308) by the old RAN (304a);
performing (421) an inter-RAN handover in response to the handover command message and communicating (423,429) with the old CN (302a) through the new RAN (306a) by the UE (308), and
performing (437,439) an inter-CN handover based on the new IP address included in the handover command message and communicating (441) with the new CN (302b) through the new RAN (306a) by the UE (308).

2. The handover method of claim 1, further comprising:
establishing (425) a tunnel with the old CN by the new RAN and sending a handover complete message to the old RAN, after sending the handover command message to the UE; and
deleting a context associated with the UE in response to the handover complete message by the old RAN.

3. The handover method of claim 1, further comprising establishing (431) a tunnel with the new CN for delivering data associated with the UE by the new RAN, after acquiring the new IP address.

4. The handover method of claim 1, further comprising registering (435) the new IP address to a Home Agent, HA, associated with the UE by the UE, after receiving the handover command message.

5. The handover method of claim 4, further comprising:
sending (439) a handover complete message to the old CN by the UE, after registering the new IP address; and
deleting the context associated with the UE in response to the handover complete message by the old CN.

6. The handover method according to one of the previous claims, further comprising:
receiving (401) a measurement report message by the old RAN (304a) comprised in the old CN (302a) requesting handover from the UE (308);
generating (407) a handover required message by the old RAN (304a) according to the measurement report message;
receiving (417) a handover command message by the old RAN (304a) comprising a new Internet Protocol, IP, address for the UE, and
sending (419) the new IP address by the old RAN to the UE.

7. An apparatus for performing handover between Core Networks, CNs, in a packet-switched network, comprising:
an old Radio Access Network (304a), RAN, belonging to an old CN (302a), adapted to receive a measurement report message requesting handover from a user equipment (308), UE, to generate a handover required message according to the measurement report message, to receive a handover command message including a new Internet Protocol, IP, address for the UE, and to send the new IP address and an address of a new RAN (306b) to the UE; and
the new RAN (306b) belonging to a new CN (302b), adapted to acquire the new IP address for the UE in response to the handover required message from the new CN and to send the handover command message with the new IP address to the old RAN,
wherein the UE is adapted to perform an inter-RAN (L2) handover in response to the handover command message, thereby communicating with the old CN through the new RAN by the UE, and to perform an inter-CN (L3) handover based on the new IP address included in the handover command message, thereby communicating with the new CN through the new RAN.

8. The apparatus of claim 7, wherein the new RAN (306b) is adapted to establish a tunnel with the old CN (302a) after sending the handover command message to the UE, and adapted to send a handover complete message to the old RAN (304a), and the old RAN is adapted to delete a context associated with the UE in response to the handover complete message.

9. The apparatus of claim 7, wherein the new RAN is adapted to establish a tunnel with the new CN for delivering data associated with the UE, after acquiring the new IP address.

10. The apparatus of claim 7, wherein the UE (308) is adapted to register the new IP address to a Home Agent, HA, associated with the UE, after receiving the handover command message.

11. The apparatus of claim 10, wherein the UE is adapted to send a handover complete message to the old CN, after registering the new IP address, and the old CN is adapted to delete the context associated with the UE in response to the handover complete message.

## Patentansprüche

1. Handover-Verfahren zwischen Kernnetzwerken (302a, b) in einem paketvermittelten Netzwerk mit einer Vielzahl von RAN (Radio Access Networks) (304a, b), die für ein Benutzerendgerät (308) und Kernnetzwerke zugänglich sind, um die RAN über das Internet-Protokoll mit einem externen Netzwerk zu verbinden, wobei das Verfahren umfasst:
Senden (405) einer Handover-Bedarfs-Nachricht von einem alten RAN (304a) zu einem neuen RAN (304b), wenn ein Benutzerendgerät (308), das über das alte RAN mit einem alten Kernnetzwerk (302a) verbunden ist, sich zu dem neuen RAN bewegt, das zu einem neuen Kernnetzwerk (302b) gehört;
Beziehen (411) einer neuen IP-Adresse für das Benutzerendgerät von dem neuen Kernnetzwerk (302b) in Reaktion auf die Handover-Bedarfs-Nachricht durch das neue RAN;
Senden (417) einer Handover-Befehls-Nachricht, die die neue IP-Adresse enthält, von dem neuen RAN zu dem alten RAN;
Einfügen (419) einer Adresse des neuen RAN (306a) in die Handover-Befehls-Nachricht und Weiterleiten der Handover-Befehls-Nachricht mit der Adresse des neuen RAN zu dem Benutzerendgerät (308) durch das alte RAN (304a);
Durchführen (421) eines Inter-RAN-Handover in Reaktion auf die Handover-Befehls-Nachricht und Kommunizieren (423, 429) mit dem alten Kernnetzwerk (302a) über das neue RAN (306a) durch das Benutzerendgerät (308), und
Durchführen (437, 439) eines Inter-Kernnetzwerk-Handover auf Basis der in der Handover-Befehls-Nachricht enthaltenen neuen IP-Adresse und Kommunizieren (441) mit dem neuen Kernnetzwerk (302b) über das neue RAN (306a) durch das Benutzerendgerät (308).

2. Handover-Verfahren nach Anspruch 1, das des Weiteren umfasst:
Schaffen (425) eines Tunnels mit dem alten Kernnetzwerk durch das neue RAN und Senden einer Handover-Abschluss-Nachricht zu dem alten RAN nach dem Senden der Handover-Befehls-Nachricht zu dem Benutzerendgerät; und
Löschen eines mit dem Benutzerendgerät zusammenhängenden Kontexts in Reaktion auf die Handover-Abschluss-Nachricht durch das alte RAN.

3. Handover-Verfahren nach Anspruch 1, das des Weiteren Schaffen (431) eines Tunnels mit dem neuen Kernnetzwerk zum Liefern von mit dem Benutzerendgerät zusammenhängenden Daten durch das neue RAN nach Beziehen der neuen IP-Adresse umfasst.

4. Handover-Verfahren nach Anspruch 1, das des Weiteren Registrieren (435) der neuen IP-Adresse bei einem mit dem Benutzerendgerät zusammenhängenden Home Agent, HA, durch das Benutzerendgerät nach Empfangen der Handover-Befehls-Nachricht umfasst.

5. Handover-Verfahren nach Anspruch 4, das des Weiteren umfasst:
Senden (439) einer Handover-Abschluss-Nachricht zu dem alten Kernnetzwerk durch das Benutzerendgerät nach Registrieren der neuen IP-Adresse; und
Löschen des mit dem Benutzerendgerät zusammenhängenden Kontext in Reaktion auf die Handover-Abschluss-Nachricht durch das alte Kernnetzwerk.

6. Handover-Verfahren nach einem der vorangehenden Ansprüche, das des Weiteren umfasst:
Empfangen (401) einer Messbericht-Nachricht durch das alte RAN (304a), das in dem alten Kernnetzwerk (302a) enthalten ist, das (Handover-Abschluss-) Handover anfordert (von dem Benutzerendgerät (308));
Erzeugen (407) einer Handover-Abschluss-Nachricht durch das alte RAN (304a) entsprechend der Messbericht-Nachricht;
Empfangen (417) einer Handover-Befehls-Nachricht durch das alte RAN (304a), die eine neue IP-Adresse für das Benutzerendgerät umfasst, und
Senden (419) der neuen IP-Adresse durch das alte RAN zu dem Benutzerendgerät.

7. Vorrichtung zum Durchführen von Handover zwischen Kernnetzwerken in einem paketvermittelten Netzwerk, die umfasst:
ein altes RAN (Radio Access Network) (304a), das zu einem alten Kernnetzwerk (302a) gehört und so eingerichtet ist, dass es eine Messbericht-Nachricht, die Handover anfordert, von einem Benutzerendgerät (308) empfängt, eine Handover-Abschluss-Nachricht entsprechend der Messbericht-Nachricht erzeugt, eine Handover-Befehls-Nachricht empfängt, die eine neue Internet-Protocol (IP)-Adresse für das Benutzerendgerät enthält, und die neue IP-Adresse sowie eine Adresse eines neuen RAN (306b) zu dem Benutzerendgerät sendet; und
das neue RAN (306b), das zu einem neuen Kernnetzwerk (302b) gehört und so eingerichtet ist, dass es die neue IP-Adresse für das Benutzerendgerät in Reaktion auf die Handover-Abschluss-Nachricht von dem neuen Kernnetzwerk bezieht und die Handover-Befehls-Nachricht mit der neuen IP-Adresse zu dem alten RAN sendet,
wobei das Benutzerendgerät so eingerichtet ist, dass es einen (Handover-Abschluss-) Handover (Inter-RAN (L2)) in Reaktion auf die Handover-Befehls-Nachricht durchführt, und so mit dem alten Kernnetzwerk über das neue RAN mittels des Benutzerendgerätes kommuniziert wird, und einen Handover zwischen Kernnetzwerken (L3) auf Basis der in der Handover-Befehls-Nachricht enthaltenen neuen IP-Adresse durchführt, und so mit dem neuen Kernnetzwerk über das neue RAN kommuniziert wird.

8. Vorrichtung nach Anspruch 7, wobei das neue RAN (306b) so eingerichtet ist, dass es nach Senden der Handover-Befehls-Nachricht zu dem Benutzerendgerät einen Tunnel mit dem alten Kernnetzwerk (302a) schafft, und so eingerichtet ist, dass es eine Handover-Abschluss-Nachricht zu dem alten RAN (304a) sendet, und das alte RAN so eingerichtet ist, dass es in Reaktion auf die Handover-Abschluss-Nachricht einen mit dem Benutzerendgerät zusammenhängenden Kontext löscht

9. Vorrichtung nach Anspruch 7, wobei das neue RAN so eingerichtet ist, dass es nach Beziehen der neuen IP-Adresse einen Tunnel mit dem neuen Kernnetzwerk zum Liefern von mit dem Benutzerendgerät zusammenhängenden Daten schafft.

10. Vorrichtung nach Anspruch 7, wobei das Benutzerendgerät (308) so eingerichtet ist, dass es nach Empfangen der Handover-Befehls-Nachricht die neue IP-Adresse bei einem mit dem Benutzerendgerät zugeordneten Home Agent registriert.

11. Vorrichtung nach Anspruch 10, wobei das Benutzerendgerät so eingerichtet ist, dass es nach Registrieren der neuen IP-Adresse eine Handover-Abschluss-Nachricht zu dem alten Kernnetzwerk sendet, und das alte Kernnetzwerk so eingerichtet ist, dass es in Reaktion auf die Handover-Abschluss-Nachricht den mit dem Benutzerendgerät zusammenhängenden Kontext löscht.

## Revendications

1. Procédé de transfert entre des réseaux d'interconnexion (302a, b) dans un réseau à commutation de paquets possédant une pluralité de réseaux d'accès radio (304a, b) accessibles à un équipement d'utilisateur (308) et des réseaux d'interconnexion pour connecter les réseaux d'accès radio à un réseau extérieur via le protocole internet, comprenant les étapes consistant à :
envoyer (405) un message de demande de transfert d'un ancien réseau d'accès radio (304a) à un nouveau réseau d'accès radio (304b) lorsqu'un équipement d'utilisateur (308) connecté à un ancien réseau d'interconnexion (302a) via l'ancien réseau d'accès radio se déplace vers le nouveau réseau d'accès radio appartenant à un nouveau réseau d'interconnexion (302b) ;
acquérir (411) par le nouveau réseau d'accès radio une nouvelle adresse IP pour l'équipement d'utilisateur auprès du nouveau réseau d'interconnexion (302b) en réponse au message de demande de transfert ;
envoyer (417) un message d'instruction de transfert incluant la nouvelle adresse IP du nouveau réseau d'accès radio à l'ancien réseau d'accès radio ;
insérer (419) une adresse du nouveau réseau d'accès radio (306a) dans le message d'instruction de transfert et acheminer vers l'équipement d'utilisateur (308), par l'ancien réseau d'accès radio (304a), le message d'instruction de transfert avec l'adresse du nouveau réseau d'accès radio ;
exécuter (421) par l'équipement d'utilisateur (308) un transfert entre réseaux d'accès radio en réponse au message d'instruction de transfert et communiquer (423, 429) avec l'ancien réseau d'interconnexion (302a) via le nouveau réseau d'accès radio (306a) ;
exécuter (437, 439) par l'équipement d'utilisateur (308) un transfert entre réseaux d'interconnexion sur la base de la nouvelle adresse IP incluse dans le message d'instruction de transfert et communiquer (441) avec le nouveau réseau d'interconnexion (302b) via le nouveau réseau d'accès radio (306a).

2. Procédé de transfert selon la revendication 1, comprenant en outre les étapes consistant à :
établir (425) par le nouveau réseau d'accès radio un tunnel avec l'ancien réseau d'interconnexion et envoyer un message de fin de transfert à l'ancien réseau d'accès radio après avoir envoyé le message d'instruction de transfert à l'équipement d'utilisateur ; et
supprimer par l'ancien réseau d'accès radio un contexte associé à l'équipement d'utilisateur en réponse au message de fin de transfert.

3. Procédé de transfert selon la revendication 1, comprenant en outre l'étape consistant à établir (431) par le nouveau réseau d'accès radio un tunnel avec le nouveau réseau d'interconnexion afin de fournir des données associées à l'équipement d'utilisateur, après avoir acquis la nouvelle adresse IP.

4. Procédé de transfert selon la revendication 1, comprenant en outre l'étape consistant à enregistrer (435) par l'équipement d'utilisateur la nouvelle adresse IP auprès d'un agent de rattachement associé à l'équipement d'utilisateur, après avoir reçu le message d'instruction de transfert.

5. Procédé de transfert selon la revendication 4, comprenant en outre les étapes consistant à :
envoyer (439) par l'équipement d'utilisateur un message de fin de transfert à l'ancien réseau d'interconnexion, après l'enregistrement de la nouvelle adresse IP ; et
supprimer par l'ancien réseau d'interconnexion le contexte associé à l'équipement d'utilisateur en réponse au message de fin de transfert.

6. Procédé de transfert selon l'une des revendications précédentes, comprenant en outre les étapes consistant à :
recevoir (401) par l'ancien réseau d'accès radio (304a) un message de rapport de mesure compris dans la demande de transfert de l'ancien réseau d'interconnexion (302a) et provenant de l'équipement d'utilisateur (308) ;
produire (407) un message de demande de transfert par l'ancien réseau d'accès radio (304a) en fonction du message de rapport de mesure ;
recevoir (417) par l'ancien réseau d'accès radio (304a) un message d'instruction de transfert comprenant une nouvelle adresse IP pour l'équipement d'utilisateur : et
envoyer (419) par l'ancien réseau d'accès radio la nouvelle adresse IP à l'équipement d'utilisateur.

7. Appareil destiné à exécuter un transfert entre des réseaux d'interconnexion, dans un réseau à commutation de paquets comprenant :
un ancien réseau d'accès radio (304a), appartenant à un ancien réseau d'interconnexion (302a), conçu pour recevoir un message de rapport de mesure demandant le transfert en provenance d'un équipement d'utilisateur (308), pour produire un message de demande de transfert en fonction du message de rapport de mesure, pour recevoir un message d'instruction de transfert incluant une nouvelle adresse IP pour l'équipement d'utilisateur et pour envoyer la nouvelle adresse IP et une adresse d'un nouveau réseau d'accès radio. (306b) à l'équipement d'utilisateur ; et
le nouveau réseau d'accès radio (306b), appartenant à un nouveau réseau d'interconnexion (302b), conçu pour acquérir auprès du nouveau réseau d'interconnexion la nouvelle adresse IP pour l'équipement d'utilisateur en réponse au message de demande de transfert et pour envoyer le message d'instruction de transfert avec la nouvelle adresse IP à l'ancien réseau d'accès radio ;
dans lequel l'équipement d'utilisateur est conçu pour exécuter un transfert entre réseaux d'accès radio (L2) en réponse au message d'instruction de transfert, ce qui permet à l'équipement d'utilisateur de communiquer avec l'ancien réseau d'interconnexion via le nouveau réseau d'accès radio, et pour exécuter un transfert entre réseaux d'interconnexion (L3) sur la base de la nouvelle adresse IP incluse dans le message d'instruction de transfert, ce qui permet de communiquer avec le nouveau réseau d'interconnexion via le nouveau réseau d'accès radio.

8. Appareil selon la revendication 7, dans lequel le nouveau réseau d'accès radio (306b) est conçu pour établir un tunnel avec l'ancien réseau d'interconnexion (302a) après avoir envoyé le message d'instruction de transfert à l'équipement d'utilisateur et pour envoyer un message de fin de transfert à l'ancien réseau d'accès radio (304a), et dans lequel l'ancien réseau d'accès radio est conçu pour supprimer un contexte associé à l'équipement d'utilisateur en réponse au message de fin de transfert.

9. Appareil selon la revendication 7, dans lequel le nouveau réseau d'accès radio est conçu pour établir un tunnel avec le nouveau réseau d'interconnexion afin de fournir des données associées à l'équipement d'utilisateur, après l'acquisition de la nouvelle adresse IP.

10. Appareil selon la revendication 7, dans lequel l'équipement d'utilisateur (308) est conçu pour enregistrer la nouvelle adresse IP auprès d'un agent de rattachement associé à l'équipement d'utilisateur, après réception du message d'instruction de transfert.

11. Appareil selon la revendication 10, dans lequel l'équipement d'utilisateur est conçu pour envoyer un message de fin de transfert à l'ancien réseau d'interconnexion, après l'enregistrement de la nouvelle adresse IP, et dans lequel l'ancien réseau d'interconnexion est conçu pour supprimer le contexte associé à l'équipement d'utilisateur en réponse au message de fin de transfert.
